# EUROPEAN PATENT APPLICATION

(11) **EP 4 600 728 A1**
(43) Date of publication of application: **13.08.2025**
(21) Application number: 22961926.7
(22) Date of filing: 08.12.2022
(51) Int. Cl.: G02F 1/167

(54) **ELECTRONIC-PAPER SCREEN WITH DISPLAY REGION HAVING RECESS**

(30) Priority: 09.10.2022 CN 202222643104 U
(71) Applicant: Hanshow Technology Co., Ltd., Jiaxing, Zhejiang 314031 (CN)
(72) Inventor: LI, Yanchen, Jiaxing, Zhejiang 314031 (CN); ZHAO, Jianguo, Jiaxing, Zhejiang 314031 (CN); HOU, Shiguo, Jiaxing, Zhejiang 314031 (CN)
(74) Representative: Patentanwälte Olbricht Buchhold Keulertz
(86) International application number: PCT/CN2022/137386
(87) International publication number: WO 2024/077747

(57) **Abstract**

An electronic paper screen with a recess in a display area, including a thin film transistor substrate (1) and an electronic paper film (2). A polygonal display area (101) is formed on the thin film transistor substrate (1). At least one side of the display area (101) is provided with a recess (103) that is recessed towards the display area (101). An electrical connection point (4) is provided on the electronic paper film (2) at a position corresponding to the recess (103) and configured to connect an electrode of the thin film transistor substrate (1) to an electrode of the electronic paper film (2). The present disclosure solves the technical problem that the placement of the electrical connection point causes irregular shaping of the electronic paper film and the protective film, leading to an increase in the size and cost of the electronic paper screen.

## Description

### CROSS-REFERENCE TO RELATED APPLICATIONS

The present disclosure claims priority to Chinese Invention Patent Application No. 202222643104.7, filed October 9, 2022, and entitled "electronic paper screen with recess in display area".

### TECHNICAL FIELD

The present disclosure relates to the field of electronic display technologies, and particularly to an electronic paper screen with a recess in a display area.

### BACKGROUND

The electronic paper screen is a type of display screen manufactured by an electrophoretic display technology. It achieves the effect of displaying images by applying a driving voltage to each pixel through a control circuit on a thin film transistor (TFT) substrate. As a reflective display screen, the electronic paper screen can keep a displayed image for a long time without continuous refreshing after the image is updated, thus achieving very low power consumption. Due to its advantages such as low power consumption, wide viewing angles, high contrast, and eye protection, the electronic paper screen is increasingly widely used in the fields of electronic shelf labels, electronic books, billboards and the like.

The AA area (active display area) of a conventional electronic-paper screen is rectangular, and in order to drive an electrode (e.g., a VCOM ITO electrode) on an FPL (Electronic Paper Film), it is necessary to reserve an ear hole on a partial area extending outwards on the FPL, set an electrical connection point (Ag glue dot) in the position of the ear hole, and connect an electrode (e.g., a VCOM electrode) on the TFT substrate to an electrode (e.g., a VCOM ITO electrode) on the FPL by means of Ag glue dispensing. However, the presence of the ear hole leads to the irregular shaping of both the FPL and a PS (i.e., a protective film, which mainly includes a waterproof layer and an anti-glare layer, and is attached to the FPL for anti-glare and isolating water vapor from entering the FPL) This irregularity also increases the dimensions of the FPL, PS, and TFT. As a result, a bezel of the electronic paper screen is widened, a screen-to-body ratio is reduced, and the cutting yield of the FPL, the PS and the TFT of the electronic paper screen are decreased (during raw material production, to improve efficiency and reduce cost, the FPL, the PS and the TFT are cut in the form of large or master slices, and several small slices may be arranged on one large or master slice, in which one small slice is the size and the form actually required by one electronic paper screen, and the "cutting yield" refers to the maximum number of the small slices arranged and cut on the large slice), resulting in increased material costs.

Regarding the issue in related technologies where the placement of electrical connection points causes the irregular shaping of the electronic paper film and protective film, increasing the size and cost of electronic paper screens, no effective solution has been proposed so far.

### SUMMARY

The objective of the present disclosure is to provide an electronic paper screen with a recess in a display area, which can avoid the irregularity of the shape of the electronic paper film, increase the screen-to-body ratio of the electronic paper screen, and reduce costs.

The objective of the present disclosure can be achieved by the following solution:
The present disclosure provides an electronic paper screen with a recess in a display area, including a thin film transistor substrate and an electronic paper film. A polygonal display area is formed on the thin film transistor substrate. At least one side of the display area is provided with a recess that is recessed towards the display area. An electrical connection point is provided on the electronic paper film at a position corresponding to the recess. The electrical connection point is configured to connect an electrode of the thin film transistor substrate to an electrode of the electronic paper film.

The present disclosure has the following advantageous effects:
In the electronic paper screen with a recess in a display area, the recess is provided on at least one side of the display area on the thin film transistor substrate, and the electrical connection point is provided on the electronic paper film at a position corresponding to the recess. This design avoids the need to create an outward-extending ear hole on the electronic paper film and avoids placing the electrical connection point at such ear hole, thereby preventing irregular shaping of the electronic paper film, increasing the screen-to-body ratio of the electronic paper screen, and reducing costs.

### BRIEF DESCRIPTION OF DRAWINGS

The following drawings are only intended to schematically illustrate and explain the present disclosure, rather than limiting the scope of the present disclosure. In the drawings:
FIG. 1 illustrates a longitudinal cross-sectional view of an electronic paper screen with a recess in a display area according to the present disclosure.
FIG. 2 illustrates a first planar structural schematic diagram of an electronic paper screen with a recess in a display area according to the present disclosure.
FIG. 3 illustrates a second planar structural schematic diagram of an electronic paper screen with a recess in a display area according to the present disclosure.
FIG. 4 illustrates a third planar structural schematic diagram of an electronic paper screen with a recess in a display area according to the present disclosure.
FIG. 5 illustrates a fourth planar structural schematic diagram of an electronic paper screen with a recess in a display area according to the present disclosure.
FIG. 6 illustrates a fifth planar structural schematic diagram of an electronic paper screen with a recess in a display area according to the present disclosure.
FIG. 7 illustrates a sixth planar structural schematic diagram of an electronic paper screen with a recess in a display area according to the present disclosure.
FIG. 8 illustrates a seventh planar structural schematic diagram of an electronic paper screen with a recess in a display area according to the present disclosure.
FIG. 9 illustrates an eighth planar structural schematic diagram of an electronic paper screen with a recess in a display area according to the present disclosure.
FIG. 10 illustrates a ninth planar structural schematic diagram of an electronic paper screen with a recess in a display area according to the present disclosure.
FIG. 11 illustrates a tenth planar structural schematic diagram of an electronic paper screen with a recess in a display area according to the present disclosure.
FIG. 12 illustrates an eleventh planar structural schematic diagram of an electronic paper screen with a recess in a display area according to the present disclosure.
FIG. 13 illustrates a twelfth planar structural schematic diagram of an electronic paper screen with a recess in a display area according to the present disclosure.
FIG. 14 illustrates a thirteenth planar structural schematic diagram of an electronic paper screen with a recess in a display area according to the present disclosure.
FIG. 15 illustrates a fourteenth planar structural schematic diagram of an electronic paper screen with a recess in a display area according to the present disclosure.
FIG. 16 illustrates a fifteenth planar structural schematic diagram of an electronic paper screen with a recess in a display area according to the present disclosure.
FIG. 17 illustrates a sixteenth planar structural schematic diagram of an electronic paper screen with a recess in a display area according to the present disclosure.
FIG. 18 illustrates a seventeenth planar structural schematic diagram of an electronic paper screen with a recess in a display area according to the present disclosure.
FIG. 19 illustrates an eighteenth planar structural schematic diagram of an electronic paper screen with a recess in a display area according to the present disclosure.

### DESCRIPTION OF EMBODIMENTS

In order to have a clearer understanding of the technical features, objectives and effects of the present disclosure, the specific embodiments of the present disclosure will now be explained with reference to the drawings.

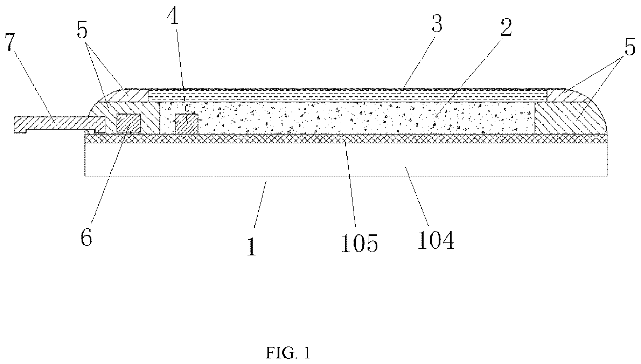

As illustrated in FIGS. 1 to 19, the present disclosure provides an electronic paper screen with a recess in a display area, including a thin film transistor substrate 1 and an electronic paper film 2. A polygonal display area 101 is formed on the thin film transistor substrate 1. At least one side of the display area 101 is provided with a recess 103 that is recessed towards the display area 101, i.e., the recess 103 is a groove formed on a side of the display area 101. An electrical connection point 4 (i.e., an Ag glue dot) is provided on the electronic paper film 2 at a position corresponding to the recess 103. The electrical connection point 4 is configured to connect an electrode (i.e., a VCOM electrode) of the thin film transistor substrate 1 to an electrode (i.e., a VCOM ITO electrode) of the electronic paper film 2.

In the present disclosure, the recess 103 is provided on at least one side of the display area 101 on the thin film transistor substrate 1, and the electrical connection point 4 is provided on the electronic paper film 2 at a position corresponding to the recess 103. This design avoids the provision of an outward-extending ear hole on the electronic paper film 2, thereby preventing irregular shaping of the electronic paper film 2, increasing the screen-to-body ratio of the electronic paper screen, and reducing costs.

In an optional embodiment of the present disclosure, one side of the display area 101 is provided with the recess 103. Alternatively, each of a plurality of sides of the display area 101 may be provided with the recess 103, and the electronic paper film 2 is provided with the electrical connection point 4 at a position corresponding to each of the recesses 103.

Further, on the side of the display area 101 where the recess 103 is provided, the number of the recess 103 may be one or more, and the electronic paper film 2 is provided with the electrical connection point 4 at a position at a position corresponding to each recess 103. The number of the electrical connection points 4 influences the driving capability of the electrode of the electronic paper film 2, and the driving capability of the thin film transistor substrate 1 to the electrode of the electronic paper film 2 becomes better as the number of the electrical connection points 4 increases. In addition, the number of the electrical connection points 4 will also influence the number of cuts of the electronic paper film 2 and the use amount of Ag glue at the electrical connection points 4. As the number of the electrical connection points 4 increases, the number of cuts of the electronic paper film 2 decreases, while the use amount of Ag glue increases, resulting in higher costs. Therefore, from the perspective of the product performance, the more electrical connection points 4, the better the performance. However, from the perspective of the cost, more electrical connection points 4 lead to increased costs. To strike a balance between performance and cost, it is more suitable to use a single electrical connection point 4 for the electronic paper screen with a size less than 3.5 inches, and it is more suitable to use two or more electrical connection points 4 for the electronic paper screen with a size of 3.5 inches or more.

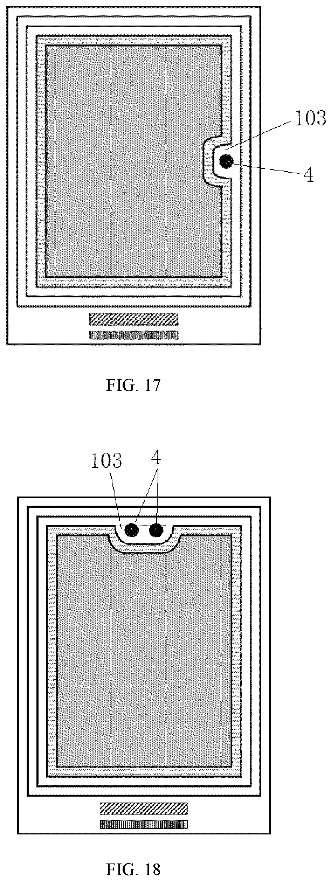

Further, in general, at the position on the electronic paper film 2 that corresponds to the recess 103, there is only one electrical connection point 4 corresponding to the recess 103 is provided on the electronic paper film 2 opposite to the recess 103 (i.e., one recess 103 corresponds to one electrical connection point 4). Of course, as illustrated in FIG. 18, at the position on the electronic paper film 2 that corresponds to the recess 103, there is a plurality of the electrical connection points 4 (i.e., one recess 103 corresponds to a plurality of electrical connection points 4).

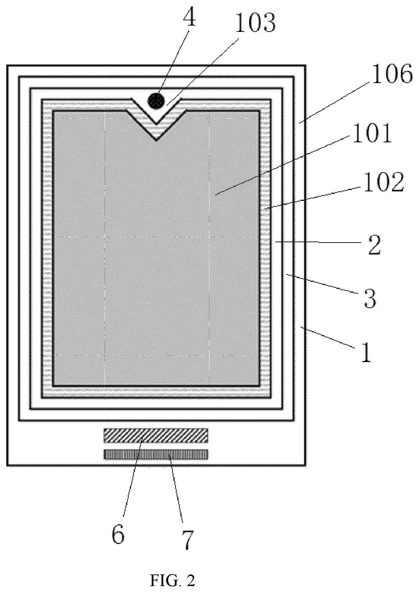

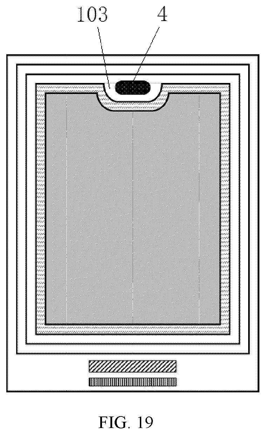

Further, as illustrated in FIGS. 2 to 18, the electrical connection point 4 may be dot-shaped. Of course, as illustrated in FIG. 19, the electrical connection point 4 may also be line-shaped (i.e., a plurality of electrical connection points 4 corresponding to one recess 103 are connected to form a line shape). In addition, the shape of the electrical connection point 4 may be designed into any shape according to actual design requirements.

In an optional embodiment of the present disclosure, as illustrated in FIG. 2, a non-display area 106 is formed on the thin film transistor substrate 1, and a border area 102 is formed between the non-display area 106 and the display area 101. The non-display area 106 is arranged to surround the display area 101. The border area 102, which is in a ring shape, is connected between the non-display area 106 and the display area 101 to demarcate the non-display area 106 and the display area 101.

Specifically, as illustrated in FIG. 2, the thin film transistor substrate 1 is rectangular, and a rectangular area in the thin film transistor substrate 1 is the display area 101 (i.e., an AA area, also called an effective display area); an area surrounding the display area 101 is the non-display area 106; and a ring-shaped area with a width between the display area 101 and the non-display area 106 is the border area 102 used to demarcate the display area 101 and the non-display area 106.

Further, as illustrated in FIG. 2, the border area 102 is recessed towards the display area 101 along the side of the display area 101 to form the recess 103.

In an optional embodiment of the present disclosure, as illustrated in FIGS. 1 and 2, the electronic paper film 2 is stacked with a front surface of the thin film transistor substrate 1, and the electronic paper film 2 covers both the display area 101 and the border area 102.

Further, the electrode of the thin film transistor substrate 1 is located at the recess 103, and the electronic paper film 2 is provided with an ear hole at a position corresponding to the vacant area 103 to expose the electrode of the electronic paper film 2 to the outside. The electric connection point 4 is located at the ear hole to connect the electrode of the thin film transistor substrate 1 to the electrode of the electronic paper film 2.

In an optional embodiment of the present disclosure, as illustrated in FIGS. 1 and 2, the electronic paper screen with a recess in a display area further includes a protective film 3, which is stacked with the electronic paper film 2 and the thin film transistor substrate 1 and covers the electronic paper film 2. The protective film 3 includes a waterproof layer (i.e., a barrier film) and an anti-glare layer (AG/PET film) which are stacked with each other, so as to achieve the effects of anti-glare and water vapor isolation, and effectively prevent water vapor from entering the thin film transistor substrate 1.

In an optional embodiment of the present disclosure, as illustrated in FIG. 1, edges of the protective film 3 and the electronic paper film 2 are provided with an edge sealing structure 5 which serves to further insulate water vapor.

Further, the edge sealing structure 5 may be, but not limited to, edge sealing glue coated on the edges of the protective film 3 and the electronic paper film 2.

In an optional embodiment of the present disclosure, as illustrated in FIG. 1, the thin film transistor substrate 1 includes a glass board 104 and a circuit board 7, a thin film crystal array 105 and a driving circuit are provided on the glass board 104, an integrated circuit 6 is provided in the edge sealing structure 5, the driving circuit is connected to the integrated circuit 6 through the electrical connection point 4, and the integrated circuit 6 is connected to an external control circuit through the circuit board 7.

Further, the integrated circuit 6 and the circuit board 7, located below the protective film 3, may be thermoscompression bonded to the thin film transistor substrate 1 using (Anisotropic Conductive Film) ACF glue.

In the present disclosure, as illustrated in FIG. 1, the thin film transistor substrate 1, the electronic paper film 2 and the protective film 3 are stacked, and the VCOM electrode on the thin film transistor substrate 1 is connected to the VCOM ITO electrode on the electronic paper film 2 through the electrical connection point 4. The thin film transistor substrate 1 is provided with the thin film crystal array 105 and the driving circuit which controls the voltage applied to the thin film crystal array 105. The electronic paper film 2 displays an image actually seen by human eyes, and an electric field is formed between the VCOM electrode on the thin film transistor substrate 1 and the VCOM ITO electrode on the electronic paper film 2, thereby driving electronic ink in the electronic paper film 2 to display the image. The integrated circuit 6 is connected to the circuit board 7, which serves to connect an external control circuit, enabling signal transmission between the external control circuit and the electronic paper film 2. The integrated circuit 6 converts a signal received from the external control circuit into a voltage and a timing signal required to refresh the electronic paper film 2.

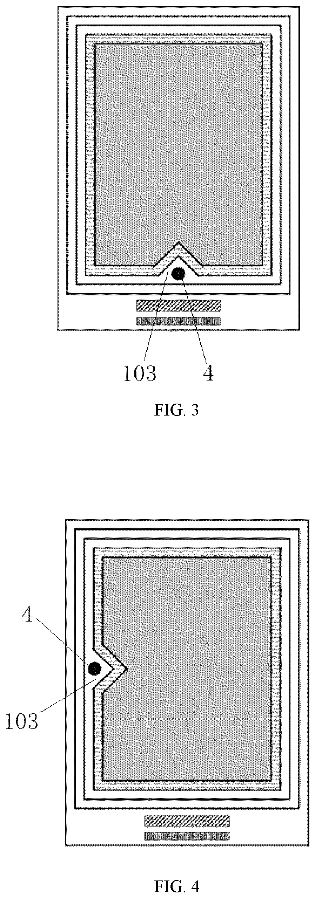

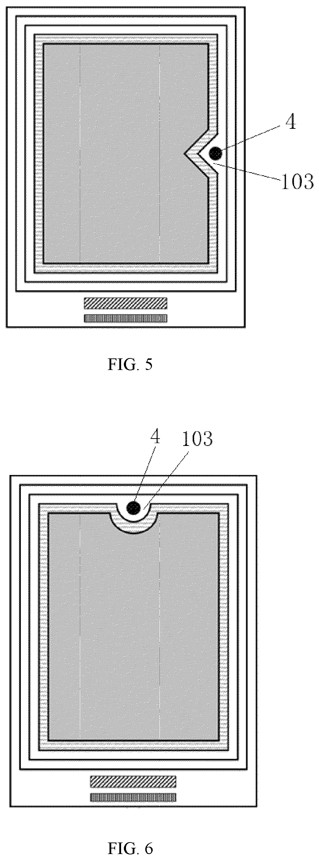

In a specific embodiment of the present disclosure, as illustrated in FIGS. 2 to 5, the recess 103 is V-shaped, and the electrical connection point 4 is disposed on the electronic paper film 2 at a position corresponding to the recess 103. In FIG. 2, the recess 103 is located at top edges of the display area 101 and the border area 102. In FIG. 3, the recess 103 is located at bottom edges of the display area 101 and the border area 102. In FIG. 4, the recess 103 is located at left edges of the display area 101 and the border area 102. In FIG. 5, the recess 103 is located at right edges of the display area 101 and the border area 102.

In this embodiment, the V-shaped recess 103 is located at the center of the corresponding side. However, in actual products, depending on specific situations, the V-shaped recesses 103 may be provided on one or more sides, each side may be provided with one or more V-shaped recesses 103, and the V-shaped recess 103 may be located at the center of the side or offset toward either end of the side.

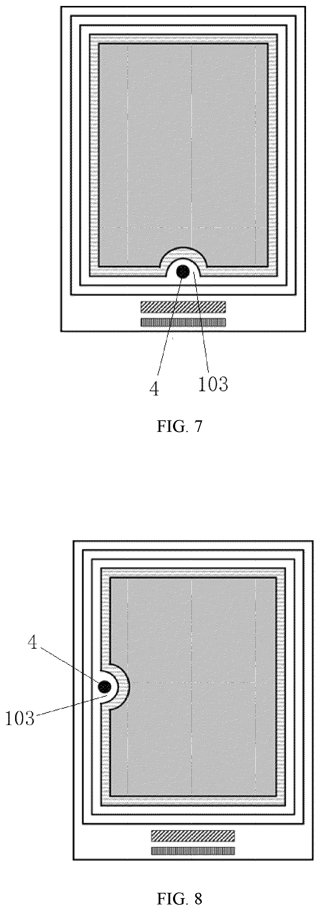

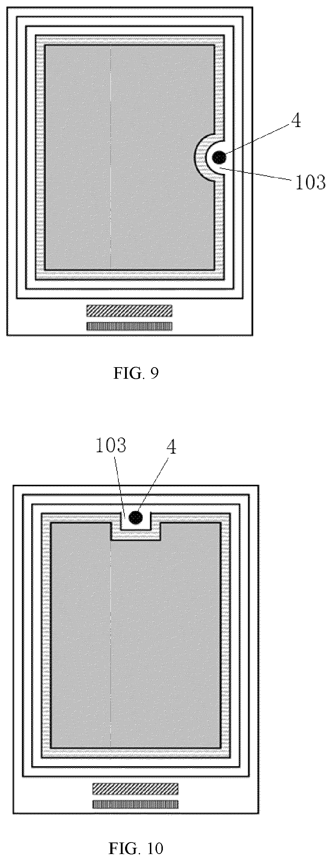

In a specific embodiment of the present disclosure, as illustrated in FIGS. 6 to 9, the recess 103 is semi-circular or semi-elliptical, and the electronic paper film 2 is provided with the electrical connection point 4 at a position corresponding to the recess 103. In FIG. 6, the recess 103 is located at the top edges of the display area 101 and the border area 102. In FIG. 7, the recess 103 is located at the bottom edges of the display area 101 and the border area 102. In FIG. 8, the recess 103 is located at the left edges of the display area 101 and the border area 102. In FIG. 9, the recess 103 is located at the right edges of the display area 101 and the border area 102.

In this embodiment, the semi-circular or semi-elliptical recess 103 is located at the center of the corresponding side. However, in actual products, depending on specific situations, the semi-circular or semi-elliptical recess 103 may be provided on one or more sides, each side may be provided with one or more the semi-circular or semi-elliptical recesses 103, and the semi-circular or semi-elliptical recess 103 may be located at the center of the side or offset toward either end of the side.

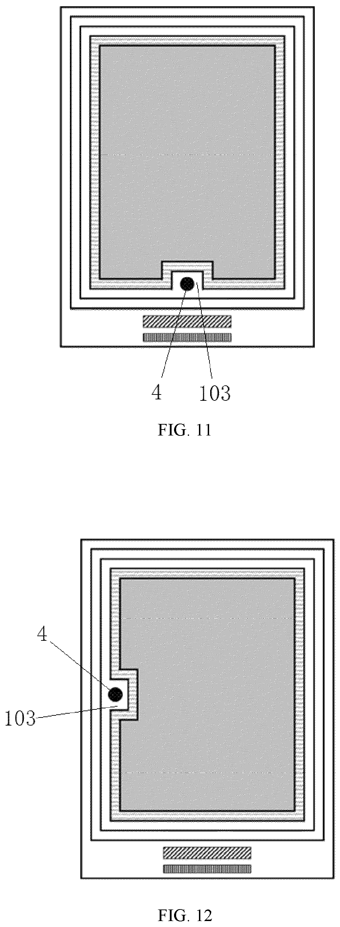

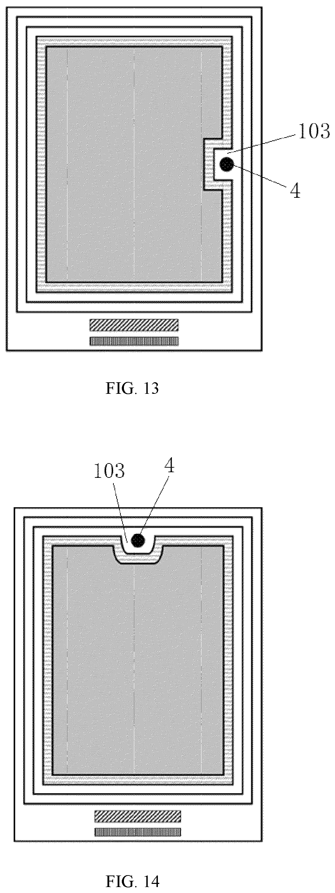

In a specific embodiment of the present disclosure, as illustrated in FIGS. 10 to 13, the recess 103 is rectangular, and the electronic paper film 2 is provided with the electrical connection point 4 at a position corresponding to the recess 103. In FIG. 10, the recess 103 is located at the top edges of the display area 101 and the border area 102. In FIG. 11, the recess 103 is located at the bottom edges of the display area 101 and the border area 102. In FIG. 12, the recess 103 is located at the left edges of the display area 101 and the border area 102. In FIG. 13, the recess 103 is located at the right edges of the display area 101 and the border area 102.

In this embodiment, the rectangular recess 103 is located at the center of the corresponding side. However, in actual products, depending on specific situations, the rectangular recess 103 may be provided on one or more sides, each side may be provided with one or more rectangular recess 103, and the rectangular recess 103 may be located at the center of the side or offset toward either end of the side.

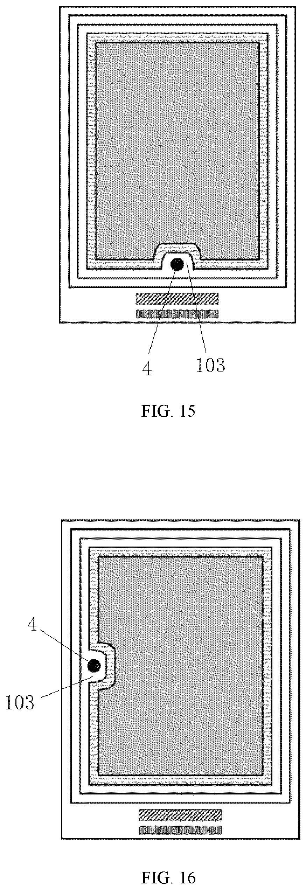

In a specific embodiment of the present disclosure, as illustrated in FIGS. 14 to 17, the recess 103 is trapezoidal or U-shaped, and the electronic paper film 2 is provided with the electrical connection point 4 at a position corresponding to the recess 103. In FIG. 14, the recess 103 is located at the top edges of the display area 101 and the border area 102. In FIG. 15, the recess 103 is located at the bottom edges of the display area 101 and the border area 102. In FIG. 16, the recess 103 is located at the left edges of the display area 101 and the border area 102. In FIG. 17, the recess 103 is located at the right edges of the display area 101 and the border area 102.

In this embodiment, the trapezoidal or U-shaped recess 103 is located at the center of the corresponding side. However, in actual products, depending on specific situations, the trapezoidal or U-shaped recess 103 may be provided on one or more sides, each side may be provided with one or more trapezoidal or U-shaped recess 103, and the trapezoidal or U-shaped recess 103 may be located at the center of the side or offset toward either end of the side.

In the present disclosure, the specific shape of the recess 103 may be, but not limited to, the shape described in the above embodiments, or any other shape, which is not limited here.

Those described above are only schematic specific embodiments of the present disclosure, and are not intended to limit the scope of the present disclosure. Any equivalent change or modification made by persons skilled in the art without departing from the concept and principle of the present disclosure should fall within the protection scope of the present disclosure.

## Claims

1. An electronic paper screen with a recess in a display area, comprising a thin film transistor substrate and an electronic paper film, wherein a polygonal display area is formed on the thin film transistor substrate, and at least one side of the display area is provided with a recess that is recessed towards the display area; and
an electrical connection point is provided on the electronic paper film at a position corresponding to the recess, and configured to connect an electrode of the thin film transistor substrate to an electrode of the electronic paper film.

2. The electronic paper screen with a recess in a display area according to claim 1, wherein one side of the display area is provided with the recess.

3. The electronic paper screen with a recess in a display area according to claim 1, wherein each of a plurality of sides of the display area is provided with the recess.

4. The electronic paper screen with a recess in a display area according to claim 2 or 3, wherein on the side of the display area where the recess is provided, the number of the recess is one or more.

5. The electronic paper screen with a recess in a display area according to claim 1, wherein the electronic paper film is provided with a plurality of the electrical connection points at positions corresponding to the recess.

6. The electronic paper screen with a recess in a display area according to claim 1, wherein the electrical connection point is dot-shaped or line-shaped.

7. The electronic paper screen with a recess in a display area according to claim 1, wherein a non-display area is formed on the thin film transistor substrate, and a border area is formed between the non-display area and the display area.

8. The electronic paper screen with a recess in a display area according to claim 7, wherein the non-display area is provided to surround the display area, and the border area, which is in a ring shape, is connected between the non-display area and the display area to demarcate the non-display area and the display area.

9. The electronic paper screen with a recess in a display area according to claim 7 or 8, wherein the border area is recessed towards the display area along the side of the display area to form the recess.

10. The electronic paper screen with a recess in a display area according to claim 7, wherein the electronic paper film is stacked with the thin film transistor substrate, and covers the display area and the border area.

11. The electronic paper screen with a recess in a display area according to claim 8, wherein the electrode of the thin film transistor substrate is located at the recess, the electronic paper film is provided with an ear hole at a position corresponding to the recess to expose the electrode of the electronic paper film to the outside, and the electric connection point is located at the ear hole to connect the electrode of the thin film transistor substrate to the electrode of the electronic paper film.

12. The electronic paper screen with a recess in a display area according to claim 10, further comprising a protective film, which is stacked with the electronic paper film and the thin film transistor substrate and covers the electronic paper film.

13. The electronic paper screen with a recess in a display area according to claim 12, wherein edges of the protective film and the electronic paper film are provided with an edge sealing structure.

14. The electronic paper screen with a recess in a display area according to claim 13, wherein the thin film transistor substrate comprises a glass board and a circuit board, a thin film crystal array and a driving circuit are provided on the glass board, an integrated circuit is provided in the edge sealing structure, the driving circuit is connected to the integrated circuit through the electrical connection point, and the integrated circuit is connected to an external control circuit through the circuit board.
